(19) Europäisches Patentamt / European Patent Office / Office européen des brevets

(11) **EP 4 432 511 A1**

(12) # EUROPEAN PATENT APPLICATION
published in accordance with Art. 153(4) EPC

(43) Date of publication:
**18.09.2024 Bulletin 2024/38**

(21) Application number: **22897436.6**

(22) Date of filing: **14.10.2022**

(51) International Patent Classification (IPC):
**$H02J\ 7/00$** (2006.01)

(52) Cooperative Patent Classification (CPC):
**H01M 10/44; H02J 7/00**

(86) International application number:
**PCT/CN2022/125389**

(87) International publication number:
**WO 2023/093353 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 CN 202111414485**

(71) Applicant: **ZTE Corporation Shenzhen, Guangdong 518057 (CN)**

(72) Inventor: **ZHANG, Qingli Shenzhen, Guangdong 518057 (CN)**

(74) Representative: **Savi, Massimiliano et al Notarbartolo & Gervasi S.p.A. Viale Achille Papa, 30 20149 Milano (IT)**

(54) **CHARGING CONTROL METHOD AND SYSTEM, AND TERMINAL DEVICE, CHARGER AND STORAGE MEDIUM**

(57) Disclosed are a charging control method and system, and a terminal device, a charger and a storage medium. The method includes, acquiring maximum charging power value of the charger; acquiring a first current value according to the maximum charging power value and a preset charging data table; and the first current value is a maximum value of current that the charger charged into the battery; determining a target cutoff current value from the first plurality of sample cutoff current values according to the first current value; determining a target cutoff voltage value according to the target cutoff current value; and charging the battery according to the target cutoff current value and the target cutoff voltage value.

Acquire the maximum charging power value of the charger — S110

Acquire a first current value according to the maximum charging power value and a preset charging data table; where the preset charging data table includes a plurality of sample cutoff current values and sample cutoff voltage values corresponding to a target battery capacity value. The first current is the maximum value of current that the charger can be charged into the battery — S120

Identify a target cutoff current value from a plurality of sample cutoff current values according to the first current value; where the target cutoff current value is less than the first current value — S130

Determine the target cutoff voltage value according to the target cutoff current value, where the target cutoff voltage value is the sample cutoff voltage value corresponding to the target cutoff current value — S140

Charge the battery according to the target cutoff current value and the target cutoff voltage value — S150

FIG. 1

EP 4 432 511 A1

## Description

### CROSS-REFERENCE TO RELATED APPLICATION

This application is filed on the basis of the Chinese patent application No. 202111414485.5 filed November 25, 2021, and claims priority of the Chinese patent application, the entire contents of which are incorporated herein by reference.

### TECHNICAL FIELD

The present disclosure relates to the field of charging, and in particular to a method for charging control, a system, a terminal device, a charger, and a storage medium.

### BACKGROUND

When the traditional battery is charged according to the set cutoff voltage and cutoff current, although the battery can be charged quickly in the constant current stage, but the actual constant voltage charging stage is too long. As a result, the charging can be fast in an early stage, but it can still take a long time to complete the charging. In order to solve this problem, smart terminal devices supporting fast charging generally adopt Full Charge Capacity (FCC) charging mode of increasing the maximum charging voltage and the cutoff current. In this way, the stage of constant current charging can be prolonged, and the stage of constant voltage charging and thus the total charging time is shortened.

However, in the present method for charging control, the same cutoff voltage and cutoff current are applied to different chargers. Overcharging or undercharging may occur, when the battery of a terminal device is charged with a charger that does not match the terminal device. For example, when a mobile terminal supports fast charging, the cutoff voltage and cutoff current set for fast charging are still applied to a charger with a small output power, a deviation of the actual charged power may occur, and the battery life and user experience are affected.

### SUMMARY

The following is a summary of the subject matter described herein. This summary is not intended to limit the scope of protection of the claims.

Provided are a method for charging control, a system, a terminal device, a charger, and a storage medium in some embodiments.

Voltage and current mentioned in the present disclosure refer to voltage value and current value respectively.

According to an embodiment of the present disclosure, a method for charging control is provided. The method is applied to a system for charging control connected with a charger and a battery respectively. The method includes: acquiring maximum charging power value of the charger; acquiring a first current value according to the maximum charging power value and a preset charging data table; where the preset charging data table includes a first plurality of sample cut-off current values and a first plurality of sample cut-off voltage values corresponding to a target battery capacity value; the first current value is the maximum value of current that the charger charged into the battery; determining a target cutoff current value from the first plurality of sample cutoff current values according to the first current value; where the target cutoff current value is less than the first current value; determining a target cutoff voltage value according to the target cutoff current value; where the target cutoff voltage value is a sample cutoff voltage value corresponding to the target cutoff current value; and charging the battery according to the target cutoff current value and the target cutoff voltage value.

According to another embodiment of the present disclosure, a system for charging control is provided. The system includes a memory, a processor and a computer program stored in the memory and executable by the processor which, when executed by the processor causes the processor to carry out the method as described above.

According to yet another embodiment of the present disclosure, a terminal device is provided. The terminal device includes the system as described above.

According to yet another embodiment of the present disclosure, a charger is provided. The charger includes the system as described above.

According to yet another embodiment of the present disclosure, a computer-readable storage medium is provided. The computer-readable storage medium stores a computer-executable instruction which, when executed by a processor causes the processor to carry out the method as described above.

Further features and advantages of present disclosure will be illustrated in the subsequent description. The objects and other advantages of the present disclosure can be achieved and obtained by the structure particularly set forth in the description, claims and drawings.

## BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.

FIG. 1 depicts a flow chart showing a method for charging control according to an embodiment of the present disclosure;

FIG. 2 depicts a flow chart showing a method for charging control according to another embodiment of the present disclosure to acquire the first current value under the condition that only the data corresponding to the target capacity presents in the charging data table;

FIG. 3 depicts a flow chart showing a method for charging control according to yet another embodiment of the present disclosure to acquire the first current value under the condition that the data corresponding to the further capacity presents in addition to the target capacity in the charging data table;

FIG. 4 depicts a flow chart showing a determination of a target cutoff current value in a method for charging control according to yet another embodiment of the present disclosure;

FIG. 5 depicts a flowchart showing the generation of a charging data table in a method for charging control according to yet another embodiment of the present disclosure;

FIG. 6 depicts a flow chart showing a processing according to a charging data table in a method for charging control when the charger is a fast charging charger, according to yet another embodiment of the present disclosure;

FIG. 7 depicts a flow chart showing a processing according to a preset parameter in a method for charging control when the charger is a fast charging charger, according to yet another embodiment of the present disclosure;

FIG. 8 depicts an example diagram showing a charging control by a method for charging control according to yet another embodiment of the present disclosure; and

FIG. 9 depicts a schematic diagram showing a system for charging control according to yet another embodiment of the present disclosure.

## DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

Although the system is shown with individual functional modules in the schematic diagram and the logical sequences are shown in the flow chart, in some cases, the system can have different modules than those shown and the operations can be executed in a different order than those shown. It should be noted that the terms "first" and "second", if used in the description, the claims and the drawings are intended to distinguish similar objects, and do not necessarily imply any specific order or sequence.

Provided are a method for charging control, a system, a terminal device, a charger, and a storage medium in some embodiments. According to an embodiment of the present disclosure, a method for charging control is provided. The method is applied to a system for charging control connected with a charger and a battery respectively. The method includes: acquiring maximum charging power value of the charger; acquiring a first current value according to the maximum charging power value and a preset charging data table; where the preset charging data table includes a first plurality of sample cutoff current values and a first plurality of sample cutoff voltage values corresponding to a target battery capacity value; the first current value is the maximum value of current that the charger charged into the battery; determining a target cutoff current value from the first plurality of sample cutoff current values according to the first current value; where the target cutoff current value is less than the first current value; determining a target cutoff voltage value according to the target cutoff current value; where the target cutoff voltage value is a sample cutoff voltage value corresponding to the target cutoff current value; and charging the battery according to the target cutoff current value and the target cutoff voltage value. According to an embodiment of the present disclosure, when the battery is being charged, appropriate cutoff voltage and cutoff current are selected according to the power and current of the charger. The battery is charged according to the target cutoff current value and the target cutoff voltage value. Thus, the amount of electrical charge that is charged into the battery can exactly and fully charge the battery. Thereby, the overcharging or incomplete charging of the battery can be avoided.

According to an embodiment, a method for charging control is provided. The method is applied to a system for charging control that is arranged in a rechargeable device. The method for charging control enables the system for charging control to select an appropriate cutoff voltage and cutoff current according to the power and current of a charger. Thereby, the overcharging or incomplete charging of the battery can be avoided.

According to an embodiment, a method for charging control is provided. The method is applied to a system for charging control that is arranged in a charger. The method for charging control enables the system for charging control to select an appropriate cutoff voltage and cutoff current according to the power and current of a charger. Thereby, the overcharging or incomplete charging of the battery by the charger can be avoided.

According to an embodiment, a method for charging control is provided. The method is applied to a system for charging control. The system for charging control selects an appropriate cutoff voltage and cutoff current, and transfers the voltage and current to a digital circuit arranged on a terminal device. The digital circuit is configured to charge the battery according to the cutoff voltage and cutoff current.

According to an embodiment, a method for charging control is provided. The method is applied to a system for charging control. The system for charging control selects an appropriate cutoff voltage and cutoff current, and transfers the voltage and current to a digital circuit arranged on a charger. The digital circuit is configured to charge the battery according to the cutoff voltage and cutoff current.

The method for charging control according to an embodiment of the present disclosure is applied to a system for charging control connected with the charger and the battery respectively. This indicates that when the battery is charged, the charger, the battery and the system for charging control are connected with each other to prepare for subsequent charging. The system for charging control is connected with the charger and the battery respectively, which does not limit the connection among the charger, the battery and the system for charging control when charging is not carried out. The connection among the charger, the battery and the system for charging control can be mutually or partially separated or connected when charging is not carried out.

The method for charging control according to an embodiment of the present disclosure is applied to a system for charging control which is respectively connected with the charger and the battery. The system for charging control is respectively connected with the charger and the battery. The connection can be wired connection through lines or a wireless connection through signals.

The above embodiments only illustrate the hardware devices to which the technical scheme proposed in present disclosure is applied, and do not limit the technical scheme proposed in present disclosure.

Refer to Table (1), which is a numerical table representing the relationship among cutoff voltage, cutoff current and battery capacity.

Table #(1)

| BATTERY CAPACITY | CUTOFF VOLTAGE | CUTOFF CURRENT |
|---|---|---|
| 4480mAh | 4.48V | 600mA |
| 4410mAh | 4.48V | 800mA |
| 4380mAh | 4.48V | 900mA |
| 4480mAh | 4.45V | 250mA |
| 4410mAh | 4.45V | 400mA |
| 4380mAh | 4.45V | 500mA |
| 4480mAh | 4.42V | 200mA |
| 4410mAh | 4.42V | 300mA |
| 4380mAh | 4.42V | 350mA |

Referring to Table #(1), when the battery is charged with the same amount of electrical charge, the greater the cutoff voltage value, the greater the cutoff current value, and the faster the charging termination. At the same time, the greater the cutoff voltage and the smaller the cutoff current, the more the electrical charge is charged into the battery.

Therefore, overcharging or undercharging may occur when the battery of the terminal device is charged with a charger that does not match the terminal device. Some examples are given below.

Example of battery overcharging. Considering that a battery S 1 with a battery capacity of 4410mAh is provided, which has a corresponding cutoff voltage value of 4.48V and a cutoff current of 800mA. Also provided is charger A, which can charge battery S1 with an amount of electricity of 4410mAh at a cutoff voltage value of 4.45V and a cutoff current of 400mA. When battery S 1 is being charged with charger A, the cutoff voltage value is 4.48V and the cutoff current is 800mA. According to table #(1), the amount of electricity/electrical charge that is charged into the battery is greater than 4480mAh in this case. As such, the battery S 1 is overcharged.

Example of battery undercharging. Considering that a battery S2 with a battery capacity of 4410mAh is provided, which has a corresponding cutoff voltage value of 4.45V and a cutoff current value of 400mA. Also provided is charger B, which can charge battery S2 with an amount of electricity of 4410mAh at a cutoff voltage value of 4.48V and a cutoff current of 800mA. When battery S2 is being charged with charger B, the cutoff voltage value is 4.45V and the cutoff current is 400mA. According to table #(1), the amount of electrical charge that is charged into the battery is lower than 4380mAh in this case. As such, the battery S2 is undercharged.

Several embodiments of the present disclosure will be described in greater detail in conjunction with the drawings.

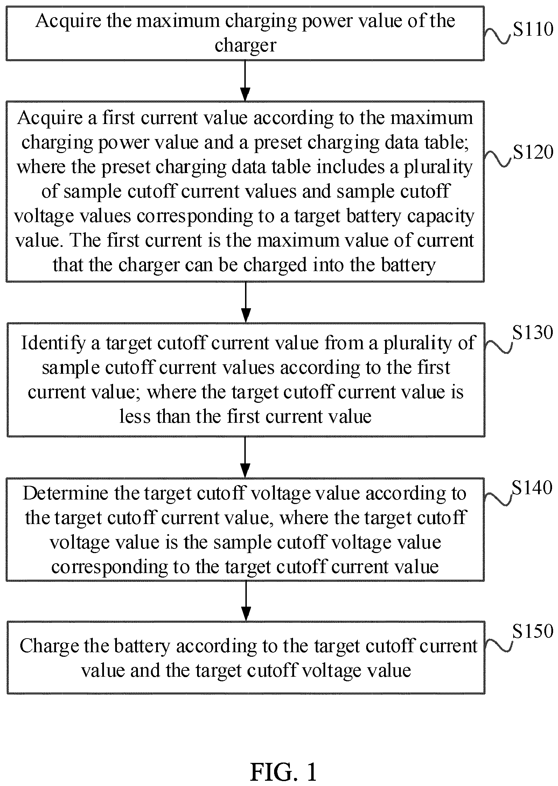

FIG. 1 depicts a flowchart showing a method for charging control according to an embodiment of the present disclosure. The method is applied to a system for charging control connected with a charger and a battery respectively. The method includes but is not limited to the following operations.

At operation S 110, the maximum charging power value of the charger is acquired.

The maximum charging power of the charger can be obtained according to the type of the charger. For example, for a Universal Serial Bus Power Delivery (USB-PD) charger, the maximum charging power of the charger can be obtained through the USB-PD protocol. For a regular charger, the maximum charging power of the charger can be obtained by power detection. For the charging method through a USB port, the USB port can be utilized as a charger, and the maximum charging power can be obtained directly according to the USB protocol. It shall be noted that the method of how the maximum charging power value of the charger is acquired is not limited by examples, and those having ordinary skills in the art can adjust the method according to the practical situations.

At operation S120, a first current value is obtained according to the maximum charging power value and a preset charging data table. The preset charging data table includes a plurality of sample cutoff current values and sample cutoff voltage values corresponding to a target battery capacity. The first current value is the maximum value of current that the charger can be charged into the battery.

The preset charging data table includes a plurality of sample cutoff current values and sample cutoff voltage values corresponding to the target battery capacity value. The target battery capacity value is an appropriate target battery capacity value comprehensively considered according to the product demand and positioning in a project. The target battery capacity value represents the amount of electricity that can be stored by the battery, which includes the factory battery capacity provided when the battery leaves the factory and the actual battery capacity after the battery is being used.

In an embodiment, referring to Table #(2), the charging data table can be obtained by charging and discharging the battery unit. The charging data table includes cutoff voltage data and cutoff current data corresponding to the battery capacity as shown in Table #(2). The charging data table is employed to determine the target cutoff voltage value and target cutoff current value corresponding to the target battery capacity value in a method for charging control. The cutoff current data and cutoff voltage data corresponding to the target battery capacity value in the charging data table are called sample cutoff voltage value and sample cutoff current value.

Table #(2)

| CUTOFF VOLTAGE | CUTOFF CURRENT |
| --- | --- |
| Va | Ia |
| Vb | Ib |
| Vc | Ic |

It is noted that the first current value is the maximum current value charged to the battery by the charger, which refers to the current value of the maximum current value that is actually charged to the battery at each unit time. The maximum current value has nothing to do with the current that the charger has charged to the battery.

At operation S 130, a target cutoff current value is identified from a plurality of sample cutoff currents according to the first current value. The target cutoff current value is less than the first current value.

In an implementation, the first current value is the maximum current that the charger charged into the battery. A constant voltage charging stage is present when the battery is being charged, only when the target cutoff current value is less than the first current value. Hence, the target cutoff current value should be less than the first current value.

At the same time, all the sample cutoff voltages and sample cutoff currents correspond to the target battery capacity. In case the target cutoff current is less than the first current value, any sample cutoff current is determined as the target cutoff current value, the corresponding sample cutoff voltage value is determined as the target cutoff voltage value, the amount of electrical charge that is charged into the battery can exactly and fully charge the battery under such current and voltage values settings. Thus, the overcharging or incomplete charging of the battery can be avoided. The charging issues in general situations are taken into consideration merely in an embodiment of the present disclosure.

At operation S 140, the target cutoff voltage value is determined according to the target cutoff current value, and the target cutoff voltage value is the sample cutoff voltage value corresponding to the target cutoff current value.

In an implementation, when the target cutoff current value has been determined from a plurality of sample cutoff current values according to the first current value, the charging data table can be looked up again. The sample cutoff voltage value corresponding to the target cutoff current value in the charging data table can be determined as the target cutoff voltage value. Alternatively, the corresponding sample cutoff voltage value adjacent to the target cutoff voltage value in the charging data table can be directly read. The determined sample cutoff voltage value can be set as the target cutoff voltage value. Those having ordinary skills in the art can determine the method data acquisition according to the practical situation.

At operation S 150, the battery is charged according to the target cutoff current value and the target cutoff voltage value.

Generally, during charging, the time when 100% of battery power is shown on a terminal device is different from the time when the charging ends. The percentage of battery power is generally obtained through an integration of the current with the coulometer. The 100% of the battery power displayed indicates that the battery is fully charged through a prediction by the integration. However, the actual termination of charging is generally judged according to whether the voltage and current of the battery meet the cutoff voltage and current. In general, charging is divided into two stages: constant current charging and constant voltage charging. During constant current charging, the voltage of the battery is lower than the cutoff voltage, and the battery can be charged with constant current. When the battery voltage reaches the cutoff voltage, the charging control system starts the constant-voltage charging, the battery voltage is maintained at the cutoff voltage, and gradually reduces the charging current. When the current is less than the cutoff current, the charging ends to complete the process of charging the battery.

It is well-known to those having ordinary skills in the art to charge the battery according to the target cutoff current and the target cutoff voltage. After the target cutoff current and the target cutoff voltage are determined, those having ordinary skills in the art arrange the charging operations according to the practical situation.

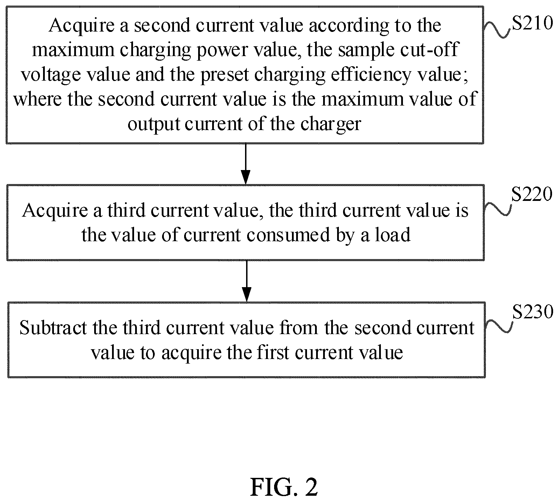

Referring to FIG. 2, in an embodiment, S 120 in the embodiment shown in conjunction with FIG. 1 further includes, but is not limited to, the following operations.

At operation S210, a second current value is obtained according to the maximum charging power value, the sample cutoff voltage value and the preset charging efficiency value. The second current value is the maximum value of output current of the charger.

At operation S220, a third current value is acquired. The third current value is the value of current consumed by a load.

At operation S230, the third current value is subtracted from the second current value to acquire the first current value.

In an embodiment, the second current value is the maximum value of output current of the charger, which refers to the maximum output current value that can be generated by the charger. The maximum output current includes the current consumed due to efficiency issues and system load issues.

It shall be noted that the third current value is the current consumed by the load which refers to the average load of the system. The third current value can be set by the relevant developers before charging or calculated according to the relevant data during the historical charging. Those having ordinary skills in the art can find ways to acquire the third current according to the practical situations.

The first current value obtained by subtracting the third current value representing the current consumed by the load from the second current value representing the maximum output current of the charger, is the maximum current that the charger charges to the battery.

The cutoff voltage values and the corresponding sample cutoff currents of each sample in the charging data table are traversed. The sample cutoff voltage value and the corresponding sample cutoff current value in the charging data table that enables the fully charge of the battery are selected. Thereby, the overcharging or the undercharging of the batteries can be addressed.

In an embodiment, the calculation of the first current according to the maximum charging power and the preset charging data table is as follows.

The maximum charging power is denoted as *p*. The first current value is denoted as $I_{real}$. The second current value is denoted as $I_{max}$. The third current value is denoted as $I_{avg}$. The preset charging efficiency is denoted as *Effect*. The selected sample cutoff current is denoted as *Ix*. The sample cutoff voltage value corresponding to the selected sample cutoff current is denoted as *Vx*.

Referring to table #(2), the voltage values and current values in table #(2) are traversed. A pair of sample cutoff current *Ix*. and sample cutoff voltage value *Vx* are arbitrarily selected, where x is one of a, b and c. The second current value is acquired according to the maximum charging power value, sample cutoff voltage value and preset charging efficiency value:

$$I_{max} = \frac{P}{Vx} * Effect$$

The third current value is subtracted from the second current value to obtain the first current value.

$$I_{real} = I_{max} - I_{avg}$$

The first current value $I_{real}$ corresponding to the selected sample cutoff voltage value and the sample cutoff current value are obtained. The first current value should be greater than *Ix*.

When the obtained first current value is not greater than the corresponding sample cutoff current, the sample cutoff current value and sample cutoff voltage value corresponding to the first current value are not subjected to subsequent processing.

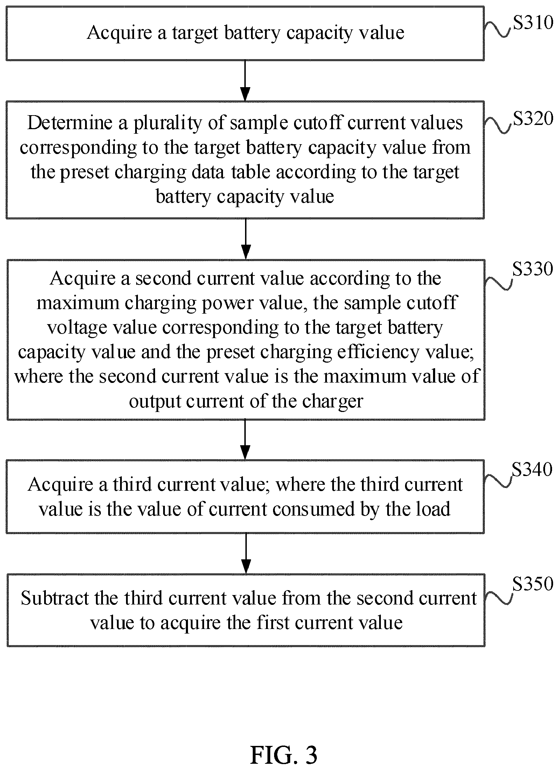

Referring to FIG. 3, in an embodiment, the preset charging data table further includes a plurality of sample cutoff current values and sample cutoff voltage values corresponding to a plurality of non-target battery capacities. Accordingly, operation S 120 described in conjunction with the embodiment shown in FIG. 1 includes but is not limited to the following operations.

At operation S310, a target battery capacity value is acquired.

At operation S320, a plurality of sample cutoff current values corresponding to the target battery capacity value are determined from the preset charging data table according to the target battery capacity value.

At operation S330, a second current value is acquired according to the maximum charging power value, the sample cutoff voltage value corresponding to the target battery capacity value and the preset charging efficiency value. The second current value is the maximum value of output current of the charger.

At operation S340, a third current value is acquired. The third current value is the value of current consumed by the load.

At operation S350, the first current value is acquired by subtracting the third current value from the second current value.

Referring to Table #(3) in an embodiment, the preset charging data table further includes a plurality of sample cutoff current values and sample cutoff voltage values corresponding to a plurality of non-target battery capacities.

Table #(3)

| BATTERY CAPACITY | CUTOFF VOLTAGE | CUTOFF CURRENT |
|---|---|---|
| W1 | Va | Ia1 |
| W2 | Va | Ia2 |
| W3 | Va | Ia3 |
| W1 | Vb | Ib1 |
| W2 | Vb | Ib2 |
| W3 | Vb | Ib3 |
| W1 | Vc | Ic1 |
| W2 | Vc | Ic2 |
| W3 | Vc | Ic3 |

In a project, a comprehensive consideration is made in which, an appropriate target battery capacity is taken as the target battery capacity according to product requirements and positioning. Then subsequent operations are carried out according to the target battery capacity.

In an embodiment, through the charging and discharging test of the battery unit, a point that takes both the fast-charging demand time and the battery life into consideration is found as the cutoff voltage and cutoff current parameters of the standard charger. The actual available capacity value of the battery in this case is taken as the target battery capacity value.

After the target battery capacity value is acquired, a plurality of sample cutoff currents corresponding to the target battery capacity value are determined from the preset charging data table according to the target battery capacity value, so as to prepare for the subsequent determination of the corresponding first current value.

After operation S320, the processing procedures from operation S330 to operation S350 are substantially the same as those from operation S210 to operation S230, and will not be described here again.

In an embodiment, the preset charging data table further includes a plurality of sample cutoff current values and sample cutoff voltage values corresponding to a plurality of non-target battery capacity values. In some embodiments, the calculation of the first current value according to the maximum charging power value and the preset charging data table is as follows.

The maximum charging power is denoted as p. The first current value is denoted as $I_{real}$. The second current value is denoted as $I_{max}$. The third current value is denoted as $I_{avg}$. The preset charging efficiency is denoted as *Effect*. The selected sample cutoff current is denoted as *Ixy*. The sample cutoff voltage value corresponding to the selected sample cutoff current is denoted as *Vx*.

Referring to Table #(3), in an example, W1 is selected as the target battery capacity. Then the voltage values and current values of Table #(3) are traversed. A pair of sample cutoff current and sample cutoff voltage value corresponding to W1 are arbitrarily selected and taken as *Ix*1 and *Vx,* where x is one of a, b and c. The second current value is acquired according to the maximum charging power value, sample cutoff voltage value and preset charging efficiency value:

$$I_{max} = \frac{P}{Vx} * Effect$$

The third current value is subtracted from the second current value to obtain the first current value.

$$I_{real} = I_{max} - I_{avg}$$

The first current value $I_{real}$ corresponding to the selected sample cutoff voltage value and the sample cutoff current value is obtained. The first current value should be greater than *Ix*1.

At the same time, when the obtained first current value is not greater than the corresponding sample cutoff current, the sample cutoff current and sample cutoff voltage value corresponding to the first current value are not subjected to subsequent processing.

It shall be noted that any examples given in the present disclosure are only for better explanation of the technical scheme proposed in the present disclosure, and do not limit the technical scheme proposed in the present disclosure.

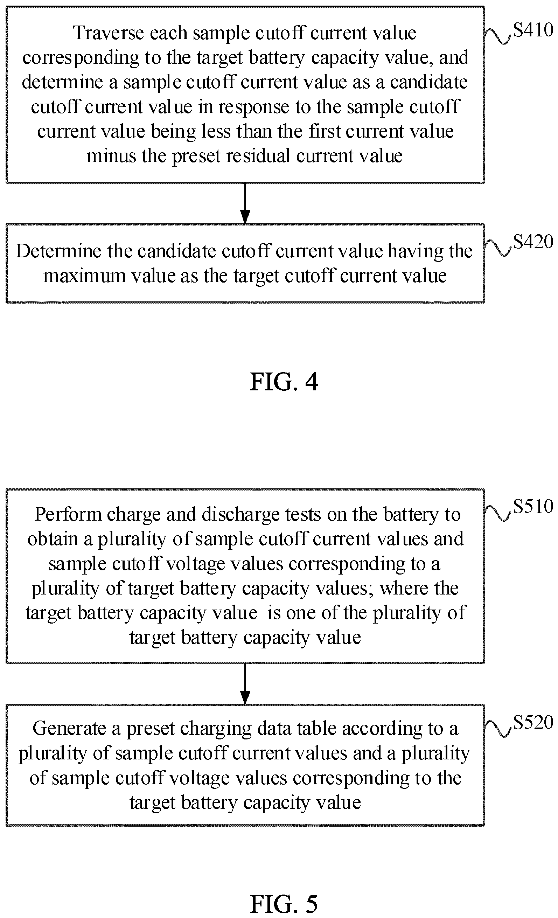

Referring to FIG. 4, in an embodiment, based on the operations of FIG. 2 or FIG. 3, operation S130 of the embodiment shown in FIG. 1 includes but is not limited to the following operations.

At operation S410, each sample cutoff current value corresponding to the target battery capacity value is traversed, and a sample cutoff current value is determined as a candidate cutoff current value in response to the sample cutoff current value being less than or equal to the first current value minus the preset residual current value.

At operation S420, the candidate cutoff current value having the maximum value is determined as the target cutoff current value.

In an implementation, the preset residual current includes the current required by the system for charging control to control charging through cutoff voltage value and cutoff current value and other currents required except charging the battery. When a sample cutoff current is less than or equal to the first current value minus the preset residual current, the sample cutoff current is determined as a candidate cutoff current. Thereby, it is ensured that the candidate cutoff current can keep the preset residual current, and the overcharging or undercharging of the battery is alleviated.

The value of the preset residual current can be determined by those having ordinary skilled in the art according to the practical situations. The preset residual current should be greater than zero.

In an embodiment, operation S410 is expressed as:

$$Ix <= I_{real} - \Delta I;$$

where, $I_{real}$ denotes the first current value, $Ix$ denotes the corresponding sample cutoff current, and $\Delta I$ denotes the preset residual current.

The traversing of each cutoff current corresponding to the target battery capacity generates a plurality of candidate cutoff currents. These candidate cutoff currents help to alleviate the overcharging or undercharging of the battery. However, the higher the cutoff current, the faster the battery will be fully charged. Therefore, the candidate cutoff current having the maximum value is determined as the target cutoff current. Thereby, the battery can be exactly and fully charged at the fastest speed under the current conditions, thus the user time is saved, and user experience is enhanced.

Referring to FIG. 5, in an embodiment, the generation of the preset charging data table with respect to the embodiment shown in FIG. 1 includes but is not limited to the following operations.

At operation S510, charge and discharge tests are conducted on the battery to obtain a plurality of sample cutoff current values and sample cutoff voltage values corresponding to a plurality of battery capacity values. The plurality of battery capacity values include the target battery capacity value as discussed above.

At operation S520, a preset charging data table is generated according to a plurality of sample cutoff current values and a plurality of sample cutoff voltage values corresponding to the target battery capacity value.

In an implementation, the charge and discharge tests are conventional means for those having ordinary skills in the art to test power parameters. The target battery capacity value is the actual available capacity of the battery corresponding to the case when the battery is charged by users or testers with standard chargers.

According to the different cutoff currents and cutoff voltages during charging, the actual amount of power charged into the battery is also different. During the generation of the equipment, different target battery capacity values can be selected according to the use of the equipment to meet the needs of users for battery capacity in different situations.

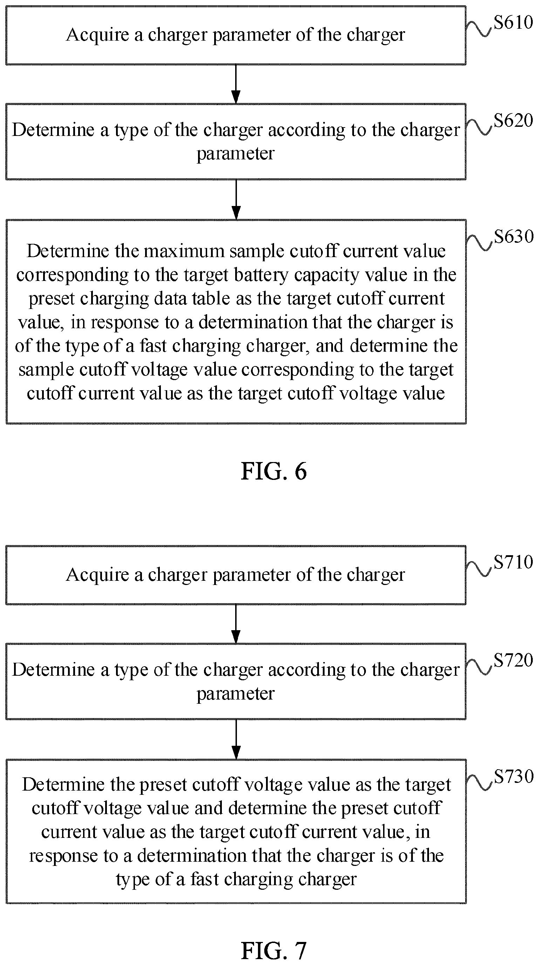

Referring to FIG. 6, in an embodiment, before S110 in the embodiment shown in conjunction with FIG. 1, the method further includes, but is not limited to, the following operations.

At operation S610, a charger parameter of the charger is acquired.

At operation S620, a type of the charger is determined according to the charger parameter.

At operation S630, the maximum sample cutoff current value corresponding to the target battery capacity value in the preset charging data table is determined as the target cutoff current value, in response to a determination that the charger is of the type of a fast charging charger, and the sample cutoff voltage value corresponding to the target cutoff current value is determined as the target cutoff voltage value.

The charging parameters such as charging protocol, supporting current value and supporting current value of the charger can be obtained by reading the protocol and charging test. The type of charger can be determined according to the obtained charger parameters. The acquisition of the charger parameters and the determination of the type of the charger according to the charger parameters are well-known to those having ordinary skills in the art, and will not be described in greater detail here.

In an embodiment, the charger may be the type of a fast-charging charger or a non-fast-charging charger. Whether the charger is a fast-charging charger can be determined according to preset conditions. For example, in general, PD chargers and QC (Quick Charge) chargers are determined as fast-charging chargers. For regular chargers, chargers that support current output above 2A are determined as fast-charging chargers, and relatively, regular chargers or USB chargers that support current below 2A are determined as non-fast-charging chargers. The above examples only illustrate the method operations of the present disclosure, and do not limit the present disclosure. Those having ordinary skills in the art can adjust the conditions for judging whether the charger is fast charging according to the practical situations.

In an embodiment, the charger is of the type of a fast-charging charger, which means that the charger can perform the charging with the preset optimal target cutoff voltage value and target cutoff current value. Therefore, the maximum sample cutoff current corresponding to the battery capacity in the preset charging data table is determined as the target cutoff current, and the sample cutoff voltage corresponding to the target cutoff current is determined as the target cutoff voltage value. As such, the optimal cutoff voltage value and cutoff current value can be applied to the fast-charging charger. The slow charging of the fast-charging charger due to unsuitable cutoff voltage value and cutoff current value can be alleviated. The charging is speeded up, and the user experience is enhanced.

Referring to FIG. 7, in an embodiment, before S 110 in the embodiment shown in conjunction with FIG. 1, the method further includes, but is not limited to, the following operations.

At operation S710, a charger parameter of the charger is acquired.

At operation S720, a type of the charger is determined according to the charger parameter.

At operation S730, the preset cutoff voltage value is determined as the target cutoff voltage value and the preset cutoff current value is determined as the target cutoff current value, in response to a determination that the charger is of the type of a fast-charging charger.

The process from operation S710 to operation S720 is essentially the same as the process from operation S610 to operation S620 and will not be repeated here.

It shall be noted that, in an embodiment, in case that the charger is of the type of a fast charging charger, it is indicated that the charger can charge with the target cutoff voltage value and target cutoff current value corresponding to the preset fast charging configuration. Therefore, the preset cutoff voltage value is determined as the target cutoff voltage value, and the preset cutoff current is determined as the target cutoff current. The corresponding cutoff voltage value and cutoff current value set in advance are applied to the fast charging charger. Thereby, the occurrence of the limitation on the charging speed of the fast charging charger due to the improper cutoff voltage value and cutoff current value is reduced, the charging speed is increased and the user experience is enhanced.

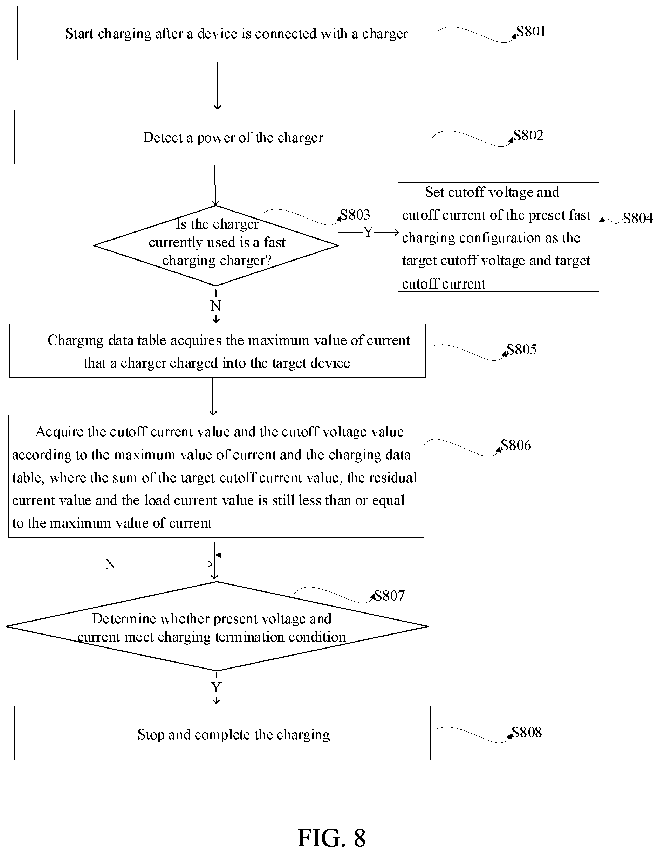

FIG. 8 depicts an example diagram showing a charging control by a method for charging control according to yet another embodiment of the present disclosure. The method includes but is not limited to the following operations.

At operation S801, charging is started after a device is connected with a charger.

At operation S802, the power of the charger is detected.

At operation S803, a determination is performed as to whether the currently used charger is a fast-charging charger, if so, operation S804 is performed, and if not, operation S805 is performed.

At operation S804, the cutoff voltage value and cutoff current value of the preset fast charging configuration are set as the target cutoff voltage value and target cutoff current value.

At operation S805, the charging data table acquires the maximum value of current that a charger charged into the target device.

At operation S806, the cutoff current value and the cutoff voltage value are obtained according to the maximum value of current and the charging data table, and the sum of the target cutoff current value, the residual current value and the load current value is still less than or equal to the maximum value of current.

At operation S807, a determination is performed as to whether the present voltage and current values meet the charging termination condition, if so, operation S808 is performed, and if not, operation S807 is performed.

At operation S808, the charging is stopped and completed.

Referring to the data in Table #(1), it is assumed that the fast-charging configuration of the device is cutoff voltage value of 4.48V and cutoff current of 800mA, and the corresponding battery capacity of the device is 4410mAh. For example, when the device is charged by USB connection, the maximum power of USB connection is 2.5W(0.5A, 5V), and the maximum current value charged by the charger to the target device is estimated to be below 500mA. However, considering that the load current generated by the average load of the system is about 100mA, and the residual current of 100mA needs to be kept, it is necessary to choose the cutoff voltage value of 4.42V and the cutoff current of 300mA. The device is charged until the charging ends and is completed.

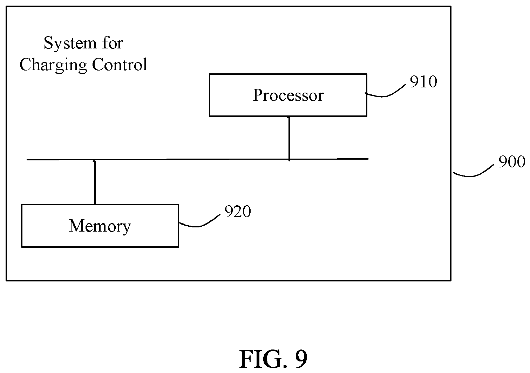

Referring to FIG. 9, according to an embodiment of the present disclosure, a system for charging control 900 is provided. The system includes a memory 920, a processor 910 and a computer program stored in the memory 920 and executable by the processor 910 which, when executed by the processor 910, causes the processor 910 to carry out the method for charging control described in any one of the embodiments above, for example, the above operations S110 to S150 described in conjunction with FIG. 1, S210 to S230 described in conjunction with FIG. 2, S310 to S350 described in conjunction with FIG. 3, S410 to S420 described in conjunction with FIG. 4, S510 to S520 described in conjunction with FIG. 5, S610 to S630 described in conjunction with FIG. 6, S710 to S730 described in conjunction with FIG. 7, or S801 to S808 described in conjunction with FIG. 8.

According to yet another embodiment of the present disclosure, a device is provided. The device includes the system for charging control 900 described in conjunction with FIG. 9 abovewhich can carry out the method for charging control described in any one of the embodiments above, for example, the above operations S110 to S150 described in conjunction with FIG. 1, S210 to S230 described in conjunction with FIG. 2, S310 to S350 described in conjunction with FIG. 3, S410 to S420 described in conjunction with FIG. 4, S510 to S520 described in conjunction with FIG. 5, S610 to S630 described in conjunction with FIG. 6, S710 to S730 described in conjunction with FIG. 7, or S801 to S808 described in conjunction with FIG. 8.

According to yet another embodiment of the present disclosure, a charger is provided. The charger includes the system for charging control 900 described in conjunction with FIG. 9 above, which can carry out the method for charging control described in any one of the embodiments above, for example, the above operations S110 to S150 described in conjunction with FIG. 1, S210 to S230 described in conjunction with FIG. 2, S310 to S350 described in conjunction with FIG. 3, S410 to S420 described in conjunction with FIG. 4, S510 to S520 described in conjunction with FIG. 5, S610 to S630 described in conjunction with FIG. 6, S710 to S730 described in conjunction with FIG. 7, or S801 to S808 described in conjunction with FIG. 8.

According to yet another embodiment of the present disclosure, there is provided a computer-readable storage medium, which stores computer-executable instructions which, when executed by a processor or controller, causes the processor or controller to carry out the operations of the method described above, for example, the above-described operations S 110 to S150 described in conjunction with FIG. 1, S210 to S230 described in conjunction with FIG. 2, S310 to S350 described in conjunction with FIG. 3, S410 to S420 described in conjunction with FIG. 4; or S510 to S520 described in conjunction with FIG. 5, S610 to S630 described in conjunction with FIG. 6, S710 to S730 described in conjunction with FIG. 7, or S801 to S808 described in conjunction with FIG. 8.

Provided are a method for charging control, a system, a terminal device, a charger, and a storage medium in some embodiments. According to an embodiment of the present disclosure, a method for charging control is provided. The method is applied to a system for charging control connected with a charger and a battery respectively. The method includes: acquiring maximum charging power value of the charger; acquiring a first current value according to the maximum charging power value and a preset charging data table; where the preset charging data table includes a first plurality of sample cutoff current values and a first plurality of sample cutoff voltage values corresponding to a target battery capacity value; the first current value is the maximum value of current that the charger charged into the battery; determining a target cutoff current value from the first plurality of sample cutoff current values according to the first current value; where the target cutoff current value is less than the first current value; determining a target cutoff voltage value according to the target cutoff current value; where the target cutoff voltage value is a sample cutoff voltage value corresponding to the target cutoff current value; and charging the battery according to the target cutoff current value and the target cutoff voltage value. Thereby, the charge that is charged into the battery can exactly and fully charge the battery. Thus, the overcharging or undercharging of the battery can be avoided.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

**Claims**

1. A method for charging control, applied to a system for charging control connected with a charger and a battery respectively, the method comprising:

   acquiring maximum charging power value of the charger;
   acquiring a first current value according to the maximum charging power value and a preset charging data table; wherein the preset charging data table comprises a first plurality of sample cutoff current values and a first plurality of sample cutoff voltage values corresponding to a target battery capacity value; and the first current value is a maximum value of current that the charger charged into the battery;
   determining a target cutoff current value from the first plurality of sample cutoff current values according to the first current value; wherein the target cutoff current value is less than the first current value;
   determining a target cutoff voltage value according to the target cutoff current value; wherein the target cutoff voltage value is one sample cutoff voltage value corresponding to the target cutoff current value, among the first plurality of sample cutoff voltage values; and
   charging the battery according to the target cutoff current value and the target cutoff voltage value.

2. The method as claimed in claim 1, wherein acquiring the first current value according to the maximum charging power value and the preset charging data table comprises:

acquiring a second current value according to the maximum charging power value, the sample cutoff voltage value and a preset charging efficiency value; wherein the second current value is a maximum value of output current of the charger;

acquiring a third current value; wherein the third current value is a value of current consumed by a load; and subtracting the third current value from the second current value to acquire the first current value.

3. The method as claimed in claim 1, wherein the preset charging data table further comprises a second plurality of sample cutoff current values and a second plurality of sample cutoff voltage values corresponding to a plurality of non-target battery capacity values, and acquiring the first current value according to the maximum charging power value and the preset charging data table comprises:

acquiring a target battery capacity value;

identifying the first plurality of sample cutoff current values corresponding to the target battery capacity value from the preset charging data table according to the target battery capacity value;

acquiring a second current value according to the maximum charging power value, the sample cutoff voltage value corresponding to the target battery capacity value and a preset charging efficiency value; wherein the second current value is a maximum value of output current of the charger;

acquiring a third current value; wherein the third current value is a value of current consumed by a load; and subtracting the third current value from the second current value to acquire the first current value.

4. The method as claimed in claims 2 or 3, wherein determining the target cutoff current value from the first plurality of sample off current values according to the first current value comprises:

traversing each of the first plurality of sample cutoff current values corresponding to the target battery capacity, and determining each of at least one sample cutoff current value among the first plurality of sample cutoff current values, as a candidate cutoff current value, in response to each of the at least one sample cutoff current being less than or equal to the first current value minus a preset residual current value; and

determining the candidate cutoff current value having maximum value as the target cutoff current value.

5. The method as claimed in claim 1, wherein the preset charging data table is generated by:

performing charge and discharge tests on the battery to acquire the first plurality of sample cutoff current values and the first plurality of sample cutoff voltage values corresponding to a plurality of battery capacity values; wherein the plurality of battery capacity values comprise the target battery capacity value; and

generating the preset charging data table according to the first plurality of sample cutoff current values and the first plurality of sample cutoff voltage values corresponding to the target battery capacity value.

6. The method as claimed in claim 1, wherein before acquiring the maximum charging power value of the charger, the method further comprises:

acquiring a charger parameter of the charger;

determining a type of the charger according to the charger parameter; and

determining one sample cutoff current value having the maximum value corresponding to the target battery capacity value, among the first plurality of sample cutoff current values in the preset charging data table, as the target cutoff current value, in response to a determination that the charger is of the type of a fast-charging charger, and determining one sample cutoff voltage value corresponding to the target cutoff current value, among the first plurality of sample cutoff voltage values, as the target cutoff voltage value.

7. The method as claimed in claim 1, wherein before acquiring the maximum charging power value of the charger, the method further comprises:

acquiring a charger parameter of the charger;

determining a type of the charger according to the charger parameter; and

determining a preset cutoff voltage value as the target cutoff voltage value, and determining a preset cutoff current value as the target cutoff current value, in response to a determination that the charger is of the type of a fast charging charger.

8. A system for charging control, comprising a memory, a processor and a computer program stored in the memory and executable by the processor which, when executed by the processor, causes the processor to carry out the method as claimed in any one of claims 1 to 7.

9. A terminal device, comprising the system as claimed in claim 8.

10. A charger, comprising the system as claimed in claim 8.

11. A computer-readable storage medium storing a computer-executable instruction which, when executed by a processor, causes the processor to carry out the method as claimed in any one of claims 1 to 7.

Acquire the maximum charging power value of the charger ⟿ S110

Acquire a first current value according to the maximum charging power value and a preset charging data table; where the preset charging data table includes a plurality of sample cutoff current values and sample cutoff voltage values corresponding to a target battery capacity value. The first current is the maximum value of current that the charger can be charged into the battery ⟿ S120

Identify a target cutoff current value from a plurality of sample cutoff current values according to the first current value; where the target cutoff current value is less than the first current value ⟿ S130

Determine the target cutoff voltage value according to the target cutoff current value, where the target cutoff voltage value is the sample cutoff voltage value corresponding to the target cutoff current value ⟿ S140

Charge the battery according to the target cutoff current value and the target cutoff voltage value ⟿ S150

FIG. 1

Acquire a second current value according to the maximum charging power value, the sample cut-off voltage value and the preset charging efficiency value; where the second current value is the maximum value of output current of the charger  S210

Acquire a third current value, the third current value is the value of current consumed by a load  S220

Subtract the third current value from the second current value to acquire the first current value  S230

FIG. 2

Acquire a target battery capacity value $\quad$ S310

Determine a plurality of sample cutoff current values corresponding to the target battery capacity value from the preset charging data table according to the target battery capacity value $\quad$ S320

Acquire a second current value according to the maximum charging power value, the sample cutoff voltage value corresponding to the target battery capacity value and the preset charging efficiency value; where the second current value is the maximum value of output current of the charger $\quad$ S330

Acquire a third current value; where the third current value is the value of current consumed by the load $\quad$ S340

Subtract the third current value from the second current value to acquire the first current value $\quad$ S350

FIG. 3

Traverse each sample cutoff current value corresponding to the target battery capacity value, and determine a sample cutoff current value as a candidate cutoff current value in response to the sample cutoff current value being less than the first current value minus the preset residual current value    ⌇S410

Determine the candidate cutoff current value having the maximum value as the target cutoff current value    ⌇S420

FIG. 4

Perform charge and discharge tests on the battery to obtain a plurality of sample cutoff current values and sample cutoff voltage values corresponding to a plurality of target battery capacity values; where the target battery capacity value is one of the plurality of target battery capacity value    ⌇S510

Generate a preset charging data table according to a plurality of sample cutoff current values and a plurality of sample cutoff voltage values corresponding to the target battery capacity value    ⌇S520

FIG. 5

Acquire a charger parameter of the charger — S610

Determine a type of the charger according to the charger parameter — S620

Determine the maximum sample cutoff current value corresponding to the target battery capacity value in the preset charging data table as the target cutoff current value, in response to a determination that the charger is of the type of a fast charging charger, and determine the sample cutoff voltage value corresponding to the target cutoff current value as the target cutoff voltage value — S630

## FIG. 6

Acquire a charger parameter of the charger — S710

Determine a type of the charger according to the charger parameter — S720

Determine the preset cutoff voltage value as the target cutoff voltage value and determine the preset cutoff current value as the target cutoff current value, in response to a determination that the charger is of the type of a fast charging charger — S730

## FIG. 7

Start charging after a device is connected with a charger — S801

Detect a power of the charger — S802

Is the charger currently used is a fast charging charger? — S803

—Y→ Set cutoff voltage and cutoff current of the preset fast charging configuration as the target cutoff voltage and target cutoff current — S804

N

Charging data table acquires the maximum value of current that a charger charged into the target device — S805

Acquire the cutoff current value and the cutoff voltage value according to the maximum value of current and the charging data table, where the sum of the target cutoff current value, the residual current value and the load current value is still less than or equal to the maximum value of current — S806

—N→ Determine whether present voltage and current meet charging termination condition — S807

Y

Stop and complete the charging — S808

FIG. 8

System for
Charging Control

Processor — 910

— 900

Memory — 920

FIG. 9

## INTERNATIONAL SEARCH REPORT

| International application No. |
| --- |
| **PCT/CN2022/125389** |

| | |
| --- | --- |
| **A.** | **CLASSIFICATION OF SUBJECT MATTER** |
| | H02J 7/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, CNKI: 电池, 充电, 容量, 截止电压, 截止电流, 终止电压, 终止电流, 最大, 电流, 功率, battery, charg +, capacity, charge off, voltage, current, max, power

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | CN 113544929 A (GUANGDONG OPPO MOBILE COMMUNICATIONS CO., LTD.) 22 October 2021 (2021-10-22) description, pages 1-2 | 1-11 |
| A | CN 109075583 A (ACTIVE-SEMI (BVI) INC.) 21 December 2018 (2018-12-21) entire document | 1-11 |
| A | CN 111384757 A (GUANGDONG OPPO MOBILE COMMUNICATIONS CO., LTD.) 07 July 2020 (2020-07-07) entire document | 1-11 |
| A | CN 102148410 A (SIMPLO TECHNOLOGY CO., LTD.) 10 August 2011 (2011-08-10) entire document | 1-11 |
| A | US 2017207651 A1 (NINGDE AMPEREX TECHNOLOGY LIMITED) 20 July 2017 (2017-07-20) entire document | 1-11 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 December 2022** | **23 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/125389**

| Patent document cited in search report | | | Publication date (day/month/year) | Patent family member(s) | | | Publication date (day/month/year) |
|---|---|---|---|---|---|---|---|
| CN | 113544929 | A | 22 October 2021 | WO | 2020223880 | A1 | 12 November 2020 |
| | | | | US | 2022060038 | A1 | 24 February 2022 |
| | | | | EP | 3968486 | A1 | 16 March 2022 |
| CN | 109075583 | A | 21 December 2018 | WO | 2017173182 | A1 | 05 October 2017 |
| | | | | US | 2017288417 | A1 | 05 October 2017 |
| CN | 111384757 | A | 07 July 2020 | WO | 2021203857 | A1 | 14 October 2021 |
| CN | 102148410 | A | 10 August 2011 | | None | | |
| US | 2017207651 | A1 | 20 July 2017 | CN | 105429249 | A | 23 March 2016 |
| | | | | EP | 3196971 | A1 | 26 July 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111414485